# EUROPEAN PATENT APPLICATION

(11) **EP 2 546 431 A2**
(43) Date of publication of application: **16.01.2013**
(21) Application number: 12187282.4
(22) Date of filing: 20.04.2011
(51) Int. Cl.: E04C 2/52, F24D 5/02, F24D 13/02, F24F 7/10, F24H 3/02

(54) **Thermal platform for heating outdoor spaces**

(62) Divisional of application: 11728410.9
(71) Applicant: Rimondini, Lamberto, 40131 Bologna (IT)
(72) Inventor: Rimondini, Lamberto, 40131 Bologna (IT)
(74) Representative: Di Bernardo, Antonio

(57) **Abstract**

The present invention relates to a thermal platform comprising a walking surface provided with a plurality of apertures, a supporting structure for the walking surface, air flow generating means, air heaters and a heating chamber where air heaters are housed, wherein the heating chamber at the top is delimited by said walking surface and the air generating means are arranged under the walking surface; the present invention further relates to a paving comprising a plurality of such platforms. The thermal platform can be operated even only for ventilating the outdoor space.

## Description

### TECHNICAL FIELD

The present invention relates to the field of heating and/or ventilation devices for outdoor spaces. More particularly, the invention relates to a modular system assemblable to form a paving with one or more heating and/ or ventilation platforms, in particular one or more platforms according to the preamble of claim 1.

### BACKGROUND ART

For heating outdoor spaces nowadays it is known to use radiant heating devices, the so called "gas mushroom" heaters, wherein a gas bottle feeds a flame placed at an height of about two metres underneath a metal hood.

However such devices cause significant pollution and allow heating exclusively the spaces very close to the device; therefore in order to heat large spaces a great number of gas mushroom heaters would be necessary resulting in installation and environmental costs.

Moreover, such gas mushroom heaters exhibit a quite reduced efficiency, since heat is transmitted only to people in the area surrounding the mushroom heater mainly by radiation: due to obvious reasons the flame is placed very high and so the air heated by the flame, due to its natural convective upward motion, is dispersed into the environment without leading to any effect useful for heating users in the proximity of the mushroom heater.

As an alternative to gas mushroom heaters, heating platforms have been suggested which, once placed on the ground, diffuse heat from the bottom, exploiting the principle of air convection.

Some heating platforms use resistors running under the walking surface; electric current flows through the resistors and due to the Joule effect they are heated, thus transmitting heat to the surrounding air, the latter tending to naturally move upwards, flowing from the bottom over a user situated on the platform.

While such platforms are functional and generally better than conventional gas mushroom heaters, they have some drawbacks.

Firstly there are significant problems concerning safety in case of rain or floods, since rainwater tends to wet the regions of the platforms where resistors are fitted, with a considerable risk of short circuits in case of a faulty electrical insulation.

Moreover the employed resistors have a relatively high cost against a relatively low efficiency.

This problem is made worse due to the fact that the natural convective motion of the air is proportional to the difference in the temperature between the air heated by such resistors and the ambient air and therefore it is not always possible to bring the space above the platform at the desired temperature.

Such situation is made even worse if a cold air flow passes through the space above the platform, such as for instance when the platform is installed in a windy area.

In this case the heated air coming out from the platform is moved away from the space above the platform, running the risk that it is not heated enough.

In all these cases the usual procedure is to raise the electric energy fed to the resistors, such that air is heated to a higher temperature: such solution, in addition to cause a great energy consumption, has also some drawbacks, related to the fact that due to safety and comfort reasons it is inconceivable to raise the temperature coming out from the platform above certain threshold values.

In order to improve heating efficiency of the platforms, it has been therefore suggested to provide the latter with a forced air system: platforms are provided with a plurality of ducts within which resistors are arranged; ducts run below the walking surface and an air flow is forced within the ducts by a fan, the air flow being warmed up by the resistors.

In order for air to go out, ducts have nozzles placed in the proximity of some holes provided on the walking surface, thus the hot air flow reaches an area above the walking surface.

Such solution is more efficient than the one where the air is distributed upwardly by natural convection, however it has some technical limits.

First of all, the temperature reached by the air flowing in the ducts provided with the resistors is strictly related to the time the air remains in the proximity of the resistors; briefly, this causes the air coming out from nozzles placed at the end of a duct to have a temperature higher than the air coming out from nozzles placed at the beginning of the same duct.

Under critical operating conditions the platform could also have regions which are not enough heated and regions which are overheated.

Secondly, it is necessary to accurately design every single platform depending on its length, above all in the case of large platforms.

If the duct is very long, in order to uniformly spread the air both at the beginning and at the end of the duct, it is necessary to accurately design the nozzles to have suitable dimensions by reducing their output cross-sections, so that dimensions of the nozzles placed very far away from the duct inlet are so small that they become uneconomic to produce.

A further drawback resulting therefrom is related to the fact that such nozzles have different dimensions throughout the plan extension of the platform, and have to be properly masked (without changing their dimensions) so as to make the platform aesthetically acceptable.

Moreover in such platforms the air flow generating means are designed and installed specifically for the platform desired to be made, with the further drawback that in the case of platforms with a large extension a high air flow rate is necessary, with the consequence that such means have considerable dimensions.

This leads to the fact that such platforms each time have to be designed and installed "ad hoc" and it is not possible to use only a portion of the platform (for example even when only a partial heating would be enough) or to remove the platform for installing it in another location, perhaps even adjusting its plan extension such to suit new requirements.

Another drawback that can be noted is the fact that, when people walk on the platform, they carry dirt that can clog the nozzles.

This problem is more evident in the case of small nozzles, since they would tend to get clogged easily preventing hot air from coming out and affecting the balance of the air flow flowing into the ducts, resulting in affecting the proper operation of the platform.

### OBJECTS AND SUMMARY OF THE INVENTION

It is an object of the present invention to overcome the drawbacks of the prior art set forth above.

In particular the object of the present invention is to provide a thermal platform that produces a uniform heat, that is easily installable and maintainable, that is easily designable and that can undergo changes in the position and dimensions without the need of making it ex-novo or without the need of replacing essential structural parts. These and other objects are accomplished by a thermal platform according to the annexed claims, which are intended as a part of the present description.

The basic idea of the present invention is to provide a thermal platform comprising a walking surface provided with a plurality of apertures, a supporting structure for the walking surface, air flow generating means, at least an air heating device and a heating chamber wherein the air heating device is housed. The heating chamber is delimited on the top by the walking surface, which in turn covers also the air flow generating means. The supporting structure is a box-like structure comprising a bottom wall of said heating chamber. The bottom wall (36) pivots about a horizontal axis, and it is movable at least to a first closed position, where it is substantially horizontal and closes the bottom of the heating chamber, and to a second open position, where it is inclined and opens the heating chamber towards the outside. Thus, as it will be further seen in detail below, it is possible to heat the air drawn in from the outside in a very uniform way and to distribute it above the walking surface in a simple but effective way, avoiding the drawbacks of known solutions of the prior art. Moreover the provision of a pivoting bottom allows for easier maintenance of the platform since, by opening the bottom, it is possible to make flow water and dirt that may enter into the heating chamber either for weather events (rain) or for routine cleaning (washing) of the walking surface. In addition such solution has the advantage of enhancing safety thereof, preventing it from being accidentally turned on with water on the bottom of the heating chamber.

The thermal platform realized in this way is an independent module particularly suitable for outdoor use, which can have even a small size (preferably smaller than 1 sq. m), and which can be connected to other like modules/platforms such to form a paving with variable dimensions.

The invention therefore relates also to such a paving.

In one embodiment, in order to improve the modularity of the suggested system, the platform can further comprise interconnection means that allow the transmission to external devices, such as for example another platform, of electric supply voltage and/ or data, such as control data to the control units of the external devices.

In one embodiment, the platform comprises a pre-heating chamber allowing the temperature of the air drawn into the heating chamber to raise. Such solution improves the platform efficiency.

In one embodiment, the walking surface comprises a plurality of boards arranged one near the other, but not in direct contact, such to leave a gap constituting the aperture for distributing air from the heating chamber 31 to the outside.

In one embodiment, boards have such a shape that the empty volume between the boards increases as it moves away from the heating chamber, so as to improve air diffusion.

In a further embodiment, the platform can be provided with lights for improving the walking action or in general the lighting of the environment where it is placed. Such lights are preferably placed at the apertures provided on the walking surface, and particularly they can be led strips or neon lamps running along the apertures defined by the boards of the walking surface.

Further objects and advantages of the present invention will become more apparent from the following description of some embodiments given purely by way of example and not as a limitation of the present invention.

### BRIEF DESCRIPTION OF THE DRAWINGS

The invention will be described below with reference to non-limitative examples, given for illustrative and not limitative purposes in the annexed drawings. These drawings show different aspects and embodiments of the present invention and, where considered appropriate, reference numerals illustrating like structures, components, materials and/ or elements in different figures are labelled similarly.
Figure 1 is a plan view partially in phantom lines of a thermal platform according to the present invention;
Figure 2 is a sectional view taken along the plane AA of figure 1 of the thermal platform of figure 1;
Figure 3 is a sectional view of the platform of the previous figures provided with a first improvement;
Figure 4 is a sectional view of the platform of the previous figures provided with a second improvement;
Figure 5 is a top view of a paving comprising a plurality of platforms according to the present invention;
Figure 6 is a top view of the walking surface of the platform of the previous figures;
Figure 7 is a sectional view of the walking surface of the previous figure.

### DETAILED DESCRIPTION OF THE INVENTION

While the invention is susceptible of various modifications and alternative forms, certain illustrated embodiments thereof are shown in the drawings and will be described below in detail. It should be understood, however, that there is no intention to limit the invention to the specific embodiment disclosed, but, on the contrary, the intention of the invention is to cover all modifications, alternative forms, and equivalents falling within the scope of the invention as defined in the claims.

In the following description and in the figures, like elements are identified with like reference numerals. The use of "for example", "etc.", "or" indicates non-exclusive alternatives without limitation unless otherwise noted. The use of "including" means "including, but not limited to," unless otherwise noted.

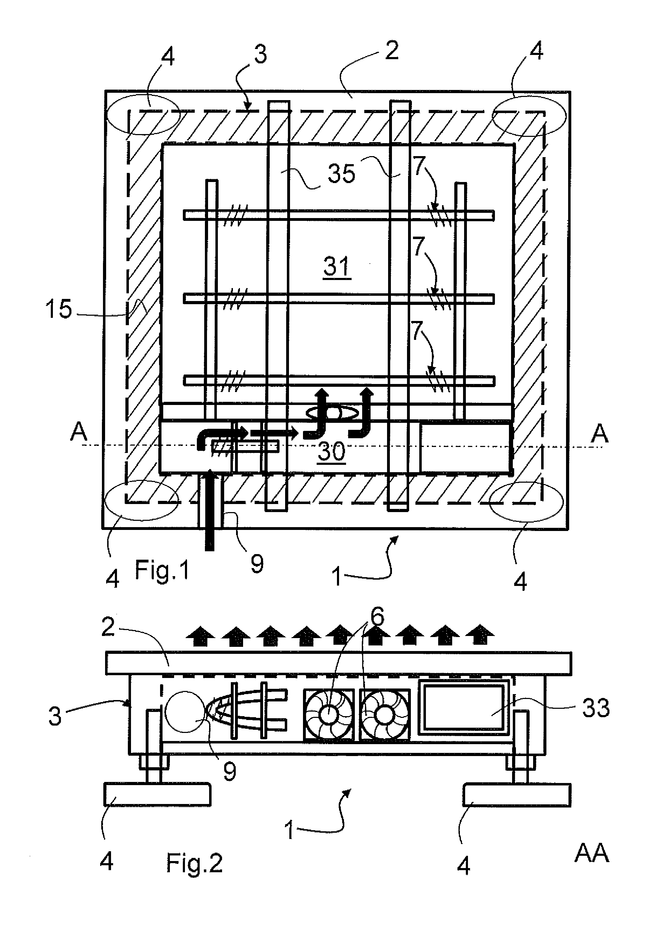

Figures 1 and 2 show two different views of a thermal platform according to the present invention, generally denoted by reference numeral 1.

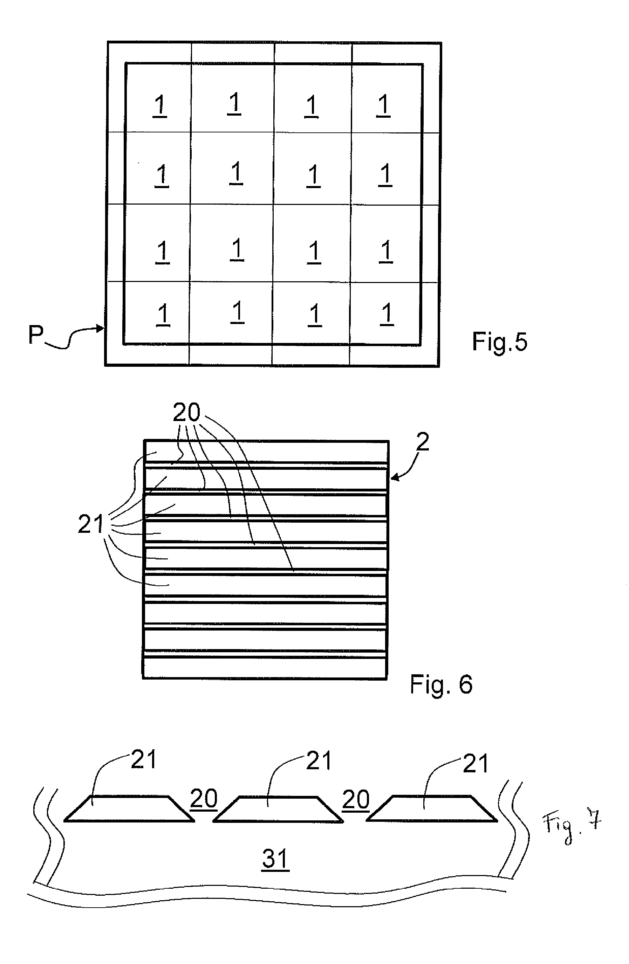

The platform 1 on the top comprises a walking surface 2 provided with a plurality of apertures 20 shown in the detail of figure 6.

The walking surface 2 comprises a plurality of apertures 20 arranged throughout its extension, for the fluid communication between the heating chamber 31 and the outer environment in a region above the walking surface.

In the embodiment shown in the examples the walking surface 2 is composed of a plurality of boards 21 arranged one near the other but not immediately adjacent to one another, such that between one board and another there is a continuous gap extending throughout at least one entire plan dimension of the surface 2, for example for the whole length thereof; such gaps between a board 21 and another, in this example, constitute the apertures 20.

The boards 21 are advantageously made of any material resistant to the effects of the outer environment, for example concrete, (suitably treated) wood, plastic material or the like.

As an alternative, it has to be noted right now, that it is possible to use also walking surfaces 2 that, even if provided with the apertures 20, are not composed of boards 21: examples of this type can be reticulated plates made of steel, aluminium, stone or the like or even suitable porous materials.

Platform 1 comprises also a supporting structure 3, the walking surface resting thereon. Structure 3 can be made of a folded metal sheet or other materials such as synthetic polymers or a part thereof with metals of different alloys.

The bottom side of the supporting structure 3 is connected to a plurality of resting feet 4 extending to the ground and height-adjustable, they being provided for example with a screw body or the like, so as to horizontally adjust the walking surface 2.

Such supporting structure 3 extends at least along the edges of the walking surface 2, like a frame; advantageously, in order to strengthen the platform 1 transverse stiffening beams 35 can be provided which extend underneath the walking surface 2. Such beams 35 reduce the tendency of the walking surface 2 to bend, especially when the latter is made of not particularly rigid materials; the position and the shapes of such beams 35 can vary depending on needs without departing from the teachings of the present invention. In a preferred embodiment, beams 35 allow the platform to have an overall compressive strength of 600 Kg.

In a preferred embodiment, beams 35 comprise threads intended to receive screws situated into the boards 21 of the walking surface 2. Thus the stability and safety of the platform 1 are improved.

With reference again to the structure 3, it defines at least partially a main heating chamber 31 wherein a plurality of air heaters 7 are housed, for example electrical resistors that get heated by the Joule effect.

According to the teachings of the present invention, the heating chamber 31 on the top is delimited by the walking surface 2 and the platform 1 comprises means 6 generating an air flow passing through the main heating chamber 31 and then passing out through the apertures 20.

More in detail it has to be noted that in the shown example structure 3 is a box-like structure defining at least three perimetral side walls and the bottom wall of the chamber 31, wherein the heaters 7 are housed: thus between the heaters 7 and the walking surface 2 there are no nozzles (unlike known solutions of the prior art), but, on the contrary, heaters 7 operate in the same chamber 31 delimited on the top by the surface 2, making the manufacturing of the assembly easier and solving the drawbacks related to the presence of the air flow conveyed into the ducts under the surface 2 as in the known solution.

Chamber 31 occupies about 65% of the plan extension of the walking surface 2 and the air flow supplied therein by means of fans 6 generates a kind of "air cushion" that remains for a certain time in contact with the heaters 7.

To this end it has to be noted, moreover, that the greater the percentage of the plan area of the walking surface overlapping the chamber 31 is, the better the results of having a uniform heat are and the fewer the problems there are in regulating the air flows.

By such arrangements a substantially uniform temperature of the air in the chamber 31 is reached, with the additional advantage related to the fact that the flow passing out through the apertures 20 is steady, without the need of controlling the flow rate by reducing or increasing the section of the apertures 20.

In this example the chamber 31 houses three heaters 7 having an elongated shape, substantially like a trapezoidal bar, extending transversally to the air flow generated by the means 6, that in this example are standard fans, controlled by a control unit 33, arranged under the walking surface at the entrance of the chamber 31. Obviously the number of heaters can be varied as desired without departing from the teachings of the present invention.

The fact of transversally arranging the heaters 7, together with the fact that the chamber 31 houses a plurality of single heaters 7, guarantees that the air flow generated by the fans 6 undergoes a substantially uniform heating, such that the area above the walking surface 2 is all kept essentially at the same temperature.

Such heating uniformity is further enhanced by the presence of a pre-heating chamber 30 placed upstream of the heating chamber 31.

Such pre-heating chamber 30 is in communication with the outer environment by at least one intake duct 9 and is in fluid communication with the heating chamber 31 via the fans 6 described above.

In one embodiment, intake duct 9 has a protection grid, preferably with meshes of about 1 sq. cm, preventing animals from entering within the pre-heating chamber.

In the preferred embodiment described herein with reference to figures 1 and 2, the pre-heating chamber is completely contained into the structure 3, under the walking surface 2 of the platform.

Within the pre-heating chamber 30 there is provided a pre-heater 10, for example a resistor, raising the temperature of the ambient air drawn in by the duct 9, such that, when it enters into the heating chamber 31 it has already a value higher than the ambient air.

Advantageously the pre-heating chamber 30 is immediately adjacent to the heating chamber 31 and a thermal convection partition wall 11 is arranged therebetween, for example a metal plate.

Thus there is a thermal exchange between the pre-heating chamber 30 and the heating chamber 31, so as to maximum exploiting heat generated by resistors 7 and 10.

Pre-heating chamber 30 is also housed within the structure 3, under the walking surface 2 and only at one side of the heating chamber 31.

The overall arrangement of the platform 1 provides the perimetral side walls and in case the bottom wall of the structure 3 to be insulated with a layer 15 of rockwool or the like: thus losses of heat outside the inner volumes (pre-heating and heating chambers) heated by the resistors 7 and 10 are avoided.

Platform 1 is further provided with a control unit 33 operatively connected to the fans 6 and/or to the resistors 7 and 10.

Platform 1 optionally comprises also temperature sensors arranged within the chamber 30 and/ or 31 so as to monitor temperatures of the air therein; such sensors in this case are connected to the control unit 33 that controls the operation of the fans and/ or the resistors 7, 10 such to maintain preferred temperature ranges within the chambers 30 and 31.

In a preferred embodiment, the control unit 33 is configured so as to operate the platform in a "summer" mode, that is in order to ventilate the above space without heating it. In this operating mode, resistors are switched off and the fans are controlled in order to force air into chamber 31 and then out through the apertures 20 defined in the walking surface. In this operating mode, fans can be both operated or it is possible to operate only one of them, such to vary the air flow directed above the walking surface.

In one embodiment, the control unit 33 is provided with a receiver, preferably a radiofrequency receiver, able to receive control signals transmitted by a user by means of a suitable controller (e.g. a remote control). Thus the user can set different operating parameters of the platform, for example, the user can vary the air flow directed towards the outside of the platform and its temperature. This is possible by regulating the number of resistors and of fans that are operated by the control unit.

Further, in a preferred embodiment, the control unit is provided with a port for the connection to a communication line, for example a data line of an ethernet network. Thus the platform can be connected to a data network and can be controlled from a remote location, for example placed in a location different than the one where the platform is installed. In one embodiment, such remote location can be the control station of a domotic network. In this embodiment, the control unit 33 is programmed so as to receive commands from the control station of the domotic network, for example commands for the activation at specific times, or deactivation commands when too high electric consumption is reached within the overall domotic network. Preferably the platform is provided with a wireless transceiver, such to be put into a wireless data network and such not to require wires.

Platform 1 comprises also power supply means, such as electric sockets, of the type known per se and no further details are given herein. In one embodiment, the control unit 33 is provided with a power line communication modem for the communication over the electric network. Thus, without the need of particular wiring modifications, it is possible to control the platform by means of a computer connected to a different socket through a corresponding power line communication modem.

Obviously the platform 1 can be installed alone and so can heat a small area, or, advantageously, it is a part of a modular paving P such as shown in figure 5.

In this case paving P comprises a plurality of platforms 1 such as the one described above which are adjacent one another in order to realize the preferred embodiment.

Platforms 1 in this case can be powered in series or in parallel, depending on needs and on simplicity of installation. In the preferred embodiment, the platform 1 is equipped with suitable electrical connectors that allow to receive an input power supply voltage (e.g. 220V @50Hz or 110V @60Hz) and to supply the same output voltage. Thus two platforms can be powered without the need of long power supply lines between each platform and the mains. A first module is connected to the mains, while the following ones receive the power supply directly from the adjacent modules.

In one embodiment, the same connection is provided for the data line, therefore each platform 1 is equipped with a data module able to receive data from a data line and to transmit again them (with or without regeneration) to the next module.

With reference again to the platform 1, the path of the air flow is immediately evident by observing figures 1 and 2, where it is shown by arrows: the ambient air is drawn in from the outside, at one side of the platform 1, via the intake duct 9.

The ambient air is drawn in by means of fans 6 that generate a slight depression in the pre-heating chamber 30, such to generate an air flow directed from the outer environment towards the pre-heating chamber 30.

When the air mass at the ambient temperature reaches the pre-heating chamber 30, its temperature is raised due to the pre-heaters 10; the air flow then moves towards the fans 6, passes therethrough and so it reaches the real heating chamber 31.

In this chamber 31 its temperature is further raised due to the air mass remaining near the heaters 7; the air mass heated in this manner finally moves out through the apertures 20 to reach the outer space above the walking surface 2.

Several variants and improvements to what described up to now are further possible. In the preferred embodiment, boards 21 have a trapezoidal section, so that the cross-section of the apertures 20 increases in the direction from the chamber 31 towards the outside, and in particular a "V" shaped cross-section, such as shown in the annexed figure 7.

As an alternative boards can have two flat parallel surfaces (the smallest one intended to be walked on) connected by sides following an exponential or parabolic profile. Thus apertures formed in this way define a volume that, as in the case of boards with a trapezoidal section, increases as it proceeds away from the heating chamber 31.

In the case of exponential or parabolic profile, in order to improve the air distribution, the angle subtended between the side and the lower face of the board (that is the one not intended to be walked on) is preferred to be more than 90°, such that the apertures 20 have a channel that, for an initial portion, is almost straight, widening more clearly in the proximity of the outside of the platform.

This characteristic improves diffusion of the air towards the outside and allows a kind of "air cushion" to be maintained inside the chamber 31, due to the pressure drop of the air flow at the output area and at the progressively wider cross-sectional area.

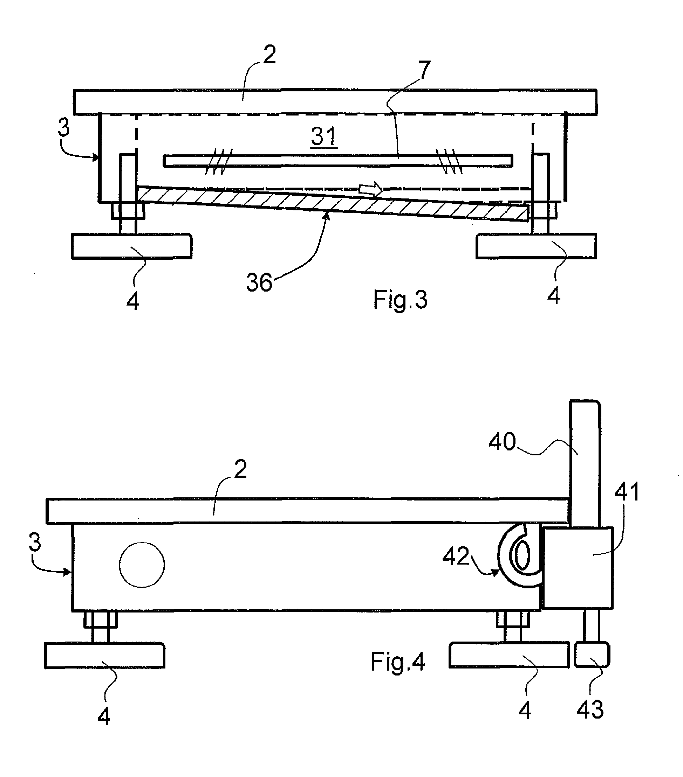

Figure 3 shows another one of such improvements: in order to avoid dirt falling on the walking surface 2 from clogging the apertures 20, the latter have a specific width, preferably ranging from 1 mm to 8 mm, and even more preferably ranging from 3 to 5 mm.

Thus dirt particles falling on the walking surface 2 fall inside the chamber 31 without clogging the apertures.

In order to prevent the chamber 31 from being progressively filled with the dirt falling therein, in one embodiment the bottom wall 36 of the chamber 31 is made as a pivoting one, such that is can be inclined as in figure 3 for the dirt particles to fall outside.

To this end the bottom wall 36 is hinged only at one side to one of the peripheral walls of the structure 3 and it can be moved from a closed position, where it is substantially horizontal and it closes the underside of the chamber 31 , to a distant position (the one shown in figure 3) where it is inclined and it opens a path for discharging the dirt accumulated thereon and that is discharged outside the chamber 31 due to the slope created.

The operation of the bottom wall 36 in the two positions can be performed in different ways, for example by means of a worm screw that can be actuated by an electric motor or manually, or by means of a lever with a mechanical attachment and linkages.

All such solutions for operating the wall 36 are within the knowledge of the person skilled in the art in the light of the teachings provided herein and therefore without any need for a closer description.

If necessary, the operation of the bottom wall can be also controlled by the control unit of the individual platform and/or in a centralized manner by the remote controller mentioned above.

The fact that it is possible to open the bottom of the chamber 31, is useful even in case of rain or flood. By tilting the bottom 36, the water does not stagnate into the chamber and it goes out therefrom. This is very important for safety reasons, since it prevents resistors 7 from being operated in the presence of water. Finally, another optional characteristic of the platform is shown in figure 4.

In this case platform 1 comprises a removable peripheral wall 40 associated to the structure 3.

Such peripheral wall 40 extends vertically, substantially perpendicular to the walking surface 2 and at least at one side thereof and it is designed for reducing a possible loss of heat from the sides of the platform 1.

In general the peripheral wall 40 can be arranged at one or both the sides of the structure depending on installation needs of the individual platform 1 and/or whether the latter is one of the corner platforms in the case of the paving P of figure 5.

The vertical wall 40 is connected to a body 41 which is fastenable to the structure 3 of the platform 1 by coupling means 42, for example a hook intended to engage a pin of the structure 3; the body 42 further rests on the ground by means of feet 43.

Even in this case the fastening modes can vary depending on manufacturing or installation needs and, in general, since they are of a type known per se, there is no need for a closer explanation.

The vertical extension of the wall 40 changes depending on the use, and it can range from a few tens of centimetres to two or three metres, depending on the field of application of the platform 1.

For example if the platform 1 is a part of a paving P used for a gazebo intended to be closed on the sides, the side wall 40 will have such an height to form at least a part of the side wall of the gazebo.

If, on the contrary, the platform 1 is a part of a paving P exposed on the sides, it will have a reduced height of a few tens of centimetres.

The main function of the wall 40 is to prevent adverse climatic conditions (eg. the wind) from easily spreading hot air coming out from the apertures 20 and it helps in maintaining the space above the walking surface 2 warm.

The wall 40 in addition to being removable can slide vertically, for example it can be retractable into the body 42 (if having the proper height), or can it can be laterally tiltable, so that it can take its operating position (vertical or perpendicular to the surface 2) only when necessary.

A further advantage of the platform 1 according to the present invention is the fact that each platform 1 is an independent module: it is equipped with its own heaters, inlet and outlet air vents, fans and control unit; the side walls, if any, can be fastened or not on each side of the platform 1 (provided that suitable fastening means are arranged).

Thus a paving P of the modular type can be made, simply by placing side by side a plurality of platforms 1, equal one another, and by placing walls 40, if any, only where necessary, by electrically connecting each platform to the power supply line or to the adjacent platforms as described above. Obviously, in some cases, the paving P can comprise both heating platforms 1, and similar non-heating modules, which have only with the structure 3 and the walking surface 2. Thus it is possible to reduce the paving costs. Preferably, however, also the non-heating platforms are equipped with a pivoting bottom such to allow them to be cleaned and to allow water to go out in case of rain or flood.

Therefore assembling such a modular paving P is very simple and it does not require too much time and too high costs.

While in the embodiments described above platform 1 has a horizontal walking surface, it is clear that such characteristic is not to be intended as limitative of the present invention. The walking surface can be inclined or can have a slope portion connected to a horizontal portion. The use of inclined walking surface allows a ramp to be made for objects or wheelchairs to climb on the platform and/or on the paving P obtained by assembling several platforms.

Thus the objects mentioned in the preamble of the present description are accomplished.

It is clear that, within the scope of the present invention as defined by the annexed claims, many variants are possible for the person skilled in the art.

For example, under the walking surface, and preferably within the chamber 31, it is possible to arrange lights and fragrance diffusers.

Lights allow the outdoor space to be better lighted and are, to this end, placed in the proximity of the apertures of the walking surface. For example, in a preferred embodiment, it is possible to provide LED strips or neon lamps, running along the apertures 20 defined by the boards 21.

Fragrance diffusers are preferably arranged in the proximity of the resistors 7 and to this end they are mounted on the same brackets supporting the resistors. These brackets allow the diffusers to be kept raised with respect to the bottom 36 of the chamber 31, so in case of flood their contents is preserved while water goes out from the suitably inclined bottom 36.

In the preferred embodiment, the platform 1 has a walking surface 2 having a size smaller or equal to 1 sq. m., in particular the surface is smaller than 950 mm x 950 mm, so that it can be transported on pallets of standard dimensions. Preferably the height of the platform is not excessive and is less than 25 cm, more preferably the height is less than 20 cm. This allows a heating chamber with compact dimensions to be provided while guaranteeing the space necessary to pivot the bottom of the chamber. The compactness of the heating chamber allows the thermal efficiency of the platform to be improved.

## Claims

1. Thermal platform (1) for heating outdoor spaces comprising:
- a walking surface (2),
- a supporting structure (3) for said walking surface (2),
- a heating chamber (31), delimited on the top by said walking surface (2), wherein at least one air heating device (7) is housed, and
- air flow generating means (6) arranged under said walking surface and intended to convey air into said heating chamber (31),
**characterized in that**
said supporting structure (3) is a box-like structure comprising a bottom wall (36) of said heating chamber (31), said bottom wall (36) pivoting about a horizontal axis, and is movable at least to a first closed position, where it is substantially horizontal and closes the bottom of said heating chamber (31), and to a second open position, where it is inclined and opens said heating chamber towards the outside.

2. Thermal platform (1) according to claim 1, wherein said at least one air heating device (7) is arranged on at least one bracket intended to maintain said air heating device raised from said bottom wall (36).

3. Thermal platform (1) according to claim 1 or 2, wherein at least one of the peripheral side walls and of the bottom wall of said structure (3) are insulated.

4. Thermal platform (1) according to claim 1 or 2 or 3, further comprising an air pre-heating chamber (30) provided at least with one air pre-heater (10), said pre-heating chamber (30) being in fluid communication with said heating chamber (31) and with an outdoor space by an air intake duct (9).

5. Thermal platform (1) according to claim 4, wherein said air flow generating means (6) are fans arranged between said pre-heating chamber (30) and said heating chamber (31).

6. Thermal platform (1) according to one or more of the preceding claims, wherein said walking surface (2) comprises a plurality of boards (21) arranged one near the other and not in contact with each other, such that between one board (21) and another there is a continuous gap extending throughout the whole length of a board.

7. Thermal platform (1) according to claim 6, wherein said gap defines a volume that increases as it moves away from the heating chamber (31).

8. Thermal platform (1) according to claim 7, wherein said boards comprise a pair of flat parallel surfaces connected by respective sides, and wherein said sides, in a sectional view, have a straight or parabolic or exponential profile.

9. Thermal platform (1) according to one or more of the preceding claims, wherein said air generating means (6) are intended to generate an air flow into the heating chamber, said flow generated into the heating chamber having a main direction, and wherein said at least one air heating device (7) extends transversally to said main direction.

10. Thermal platform (1) according to one or more of the preceding claims, comprising a control unit (33) operatively connected to said air flow generating means (6) and/ or to said at least one heating device (7) such to control the air flow conveyed into said heating chamber (31), said control unit (33) being intended to control the activation and/or deactivation of said at least one heating device (7) and of said air flow generating means according to the commands received from a controller operable by a user.

11. Platform according to claim 10, wherein said control unit (33) is intended to control the activation and/or deactivation of said at least one heating device (7) and of said air flow generating means (6) according to the commands received through a data port intended to receive control data transmitted through a data line of a domotic network, and wherein said platform (1) further comprises means for transmitting data received on said data line to a second data line, such to transmit the data received from a second device connected to said second data line.

12. Thermal platform (1) according to any of the preceding claims, further comprising means for the electrical connection to a power supply line and means for supplying an output power supply voltage, such to allow a second identical platform to be connected.

13. Thermal platform (1) according to any of the preceding claims, further comprising lighting devices arranged in the proximity of apertures (20), particularly a plurality of led strips running under the apertures defined by the boards of the walking surface.

14. Modular paving (P) comprising at least one platform (1) according to one or more of the preceding claims.
